# FASCICULE DE BREVET EUROPEEN

(11) **EP 4 114 167 B1**
(45) Date de publication et mention de la délivrance du brevet: **28.02.2024**
(21) Numéro de dépôt: 21708544.8
(22) Date de dépôt: 02.03.2021
(51) Int. Cl.: A01G 3/037

(54) **SÉCATEUR À BUTÉE MÉCANIQUE**
GARTENSCHERE MIT EINEM MECHANISCHEN ENDANSCHLAG
PRUNING SHEARS WITH A MECHANICAL END STOP

(30) Priorité: 02.03.2020 FR 2002090
(43) Date de publication de la demande: 11.01.2023
(73) Titulaire: Innovation Fabrication Commercialisation Infaco, 81140 Cahuzac-sur-Vère (FR)
(72) Inventeur: GAUTIER, David, 81600 Gaillac (FR); PRADEILLES, David, 81600 Montans (FR)
(74) Mandataire: IPAZ
(86) Numéro de dépôt international: PCT/EP2021/055121
(87) Numéro de publication internationale: WO 2021/175817

(56) Documents cités:
- EP-A1- 3 141 107
- EP-A1- 3 225 100
- KR-B1- 100 699 197
- US-A1- 2012 011 729

## Description

La présente invention concerne un sécateur motorisé électroportatif à butée mécanique.

Le domaine de l'invention est le domaine des sécateurs motorisés électroportatifs.

### État de la technique

Les sécateurs motorisés électroportatifs comprennent un outil de coupe ayant au moins une lame mobile et un moteur électrique pour actionner ladite lame mobile. Le passage du sécateur manuel au sécateur motorisé électroportatif a permis d'augmenter la productivité de leurs opérateurs tout en réduisant la fatigue générée.

Les sécateurs motorisés ne sont toutefois pas dénués de défauts. Ils sont ainsi souvent enclins à se dérégler, ce qui peut modifier la course de déplacement de lame mobile. Cela peut, dans des cas extrêmes, aller jusqu'à faire dérailler cette lame mobile.

Pour s'assurer que la lame mobile ne se déplace pas au-delà de la course de déplacement voulue, les sécateurs actuels sont munis de moyens de détection de fin de course. Ces moyens comprennent typiquement un ou plusieurs capteurs de position, par exemple des capteurs magnétiques (de type Hall) associés à un ou plusieurs aimants. EP 3 225 100 A1 divulgue un sécateur où la butée de la lame mobile est détectée par un capteur Hall.

Or, l'utilisation de tels moyens de détection augmente le nombre d'éléments présents dans le sécateur et augmente intrinsèquement son encombrement, sa complexité et son coût. De plus, ces moyens de détection nécessitent d'être correctement positionnés et calibrés, augmentant ainsi la complexité d'assemblage du sécateur. De surcroit, ces moyens de détection ont généralement tendance à se dérégler, augmentant ainsi le besoin de maintenance de l'outils.

Un but de la présente invention est de remédier à au moins un des inconvénients précités.

Un autre but de la présente invention est de proposer un sécateur dans lequel la fin de course la lame mobile est détectée de manière plus simple, moins coûteuse, moins encombrante et plus fiable.

### Exposé de l'invention

L'invention permet d'atteindre au moins l'un de ces buts par un sécateur motorisé électroportatif comprenant au moins une lame mobile, un moteur électrique pour entrainer ladite au moins une lame mobile, et au moins une butée mécanique de fin de course mécanique de ladite lame mobile dans au moins un sens de déplacement, caractérisé en ce qu'il comprend en outre un moyen de détection de butée, dans ledit au moins un sens de déplacement, en fonction d'un courant consommé par ledit moteur électrique.

Le sécateur selon l'invention propose ainsi de détecter la position de butée de la lame mobile en fonction du courant consommé par le moteur du sécateur. En effet, lorsque la lame mobile vient en position de butée mécanique, cela entraine une augmentation du courant consommé par le moteur électrique. En surveillant la valeur de ce courant, il est donc possible de détecter la mise en butée de la lame. Par conséquent, il n'est pas nécessaire d'utiliser un capteur dédié, de type capteur magnétique, aimant ou capteur à effet Hall, surveillant la position de la lame mobile.

Ainsi, l'architecture du sécateur est simplifiée, moins coûteuse et moins encombrante.

De surcroît, la surveillance de la position de la lame mobile ne dépend pas du fonctionnement d'un capteur dédié, mais uniquement de la présence d'une butée mécanique et du courant moteur, ce qui est plus robuste.

De plus, la réduction du nombre de composants électroniques requis dans le sécateur, en particulier au niveau des pièces mobiles, permet, par exemple, l'utilisation d'une unique carte électronique dans le sécateur. Cela permet en outre d'éviter l'utilisation de fils de connexion entre plusieurs cartes électriques et ainsi d'améliorer la fiabilité du sécateur. En effet, de tels fils peuvent constituer un risque de défaillance accrue, en particulier par rupture au niveau de leur point de contact avec les cartes électroniques.

Le sécateur selon l'invention peut comprendre un outil de coupe muni d'une unique lame mobile associée à une contre lame fixe ou, alternativement, un outil de coupe comprenant deux lames mobiles.

Le moteur électrique du sécateur peut par exemple être de type « sans balais » ou « brushless ».

Le moteur peut entrainer au moins une lame, généralement en rotation, dans un sens correspondant au sens de fermeture de l'outil de coupe et dans le sens inverse correspondant au sens d'ouverture de l'outil de coupe.

Selon un mode de réalisation au moins une butée mécanique peut être disposée sur tout élément du sécateur.

Cette butée mécanique peut par exemple être disposée sur le corps du sécateur, ou sur une contre-lame fixe, de sorte que la lame mobile vient au contact de ladite butée mécanique en fin de course.

Avantageusement, au moins une butée mécanique peut être prévue sur ladite au moins une lame mobile.

Ainsi, il est possible d'équiper le sécateur d'une butée mécanique sans avoir à intervenir sur l'architecture du sécateur mais uniquement sur la lame mobile. Par conséquent, il est possible d'équiper chaque lame mobile d'une butée mécanique adaptée à la lame mobile et au moment de la fabrication de la lame.

Suivant un mode réalisation, au moins une butée mécanique peut comprendre une forme faisant saillie de la lame mobile, tel qu'un picot ou une bosse, et prévue pour venir en butée contre une portion du corps du sécateur ou de la contre-lame.

Selon un mode de réalisation, au moins une lame mobile peut comprendre une section dentée en prise avec une roue dentée, au moins une butée mécanique étant formée par une modification du profil de denture de ladite section dentée, à au moins une de ses extrémités.

Ainsi, il est possible d'équiper une lame mobile d'au moins une butée mécanique directement lors de sa fabrication. De plus, il n'est pas requis d'ajouter d'élément additionnel à la lame mobile pour l'équiper d'une butée mécanique.

La modification du profil de denture peut de préférence être effectuée au niveau de la dernière dent, voire de l'avant dernière dent, se trouvant du côté d'une extrémité de la section dentée de la lame mobile.

Préférentiellement, de manière non limitative, au moins une butée mécanique peut être formée par un creux de dent dont la profondeur est réduite par rapport aux autres creux de dent de la section dentée. Alternativement, toute autre modification du profil de denture peut convenir pour former une butée mécanique. Il est par exemple possible de modifier l'épaisseur d'une dent, sa hauteur ou voire même réduire l'intervalle entre deux dents.

Selon un mode de réalisation, le sécateur peut comprendre plusieurs butées mécaniques.

Ainsi, il est possible de détecter différentes fins de course de déplacement dans le sécateur selon l'invention, et diminuer d'autant les capteurs additionnels qu'il aurait fallu utiliser dans les solutions de l'état de la technique.

Lorsque le sécateur comprend une lame mobile coopérant avec une contre-lame fixe, alors le sécateur selon l'invention peut comprendre plusieurs, en particulier deux, butées mécaniques pour ladite lame mobile. Dans ce cas, chaque butée mécanique peut constituer une limite de fin de course mécanique de ladite lame mobile dans un sens de déplacement de la lame mobile.

Lorsque le sécateur comprend deux lames mobiles coopérant entre-elles, alors le sécateur selon l'invention peut comprendre au moins une butée mécanique, et en particulier deux butées mécaniques, pour chaque lame mobile. Chaque butée mécanique associée à chaque lame mobile peut constituer une limite de fin de course mécanique dans un sens de déplacement de ladite lame mobile.

Selon un mode réalisation, le moyen de détection de butée peut être configuré pour comparer le courant consommé par le moteur à un seuil prédéfini.

Ainsi, il est possible d'associer une valeur de courant consommé par le moteur électrique et correspondant à une mise en butée de la lame mobile contre la butée mécanique. Il est aussi possible d'ajuster à la hausse, comme à la baisse, cette valeur de courant. Cela permet d'éviter que chaque augmentation de courant moteur, en particulier lors d'une coupe, ne déclenche par erreur une détection de butée mécanique.

Avantageusement, le sécateur selon l'invention peut comprendre au moins une butée théorique de fin de course d'au moins une lame mobile, dont la position est définie en fonction d'au moins une butée mécanique et :
- d'un nombre de tours moteur ou,
- d'une durée d'entrainement.

Dans ce cas, le moyen de détection de butée peut être configuré pour détecter au moins une butée théorique dans au moins un sens de déplacement d'au moins une lame mobile.

Ainsi, il est possible de définir une fin de course théorique de déplacement d'au moins une lame mobile différente de la fin de course mécanique.

Par conséquent, il est possible d'avoir une butée de fin de course théorique à proximité de la fin de course mécanique. Cela permet de limiter la course de déplacement de la lame sans nécessiter de mise en butée mécanique, ce qui permet de limiter la surconsommation liée à une mise en butée mécanique. Cela permet aussi limiter l'usure d'éléments du sécateur, en particulier du moteur et de la butée mécanique.

En particulier, pour un sens de déplacement donné d'une lame mobile, au moins une butée théorique peut être définie du même côté que la butée mécanique.

Alternativement, ou en plus, pour un sens de déplacement donné d'une lame mobile, au moins une butée théorique peut être définie du côté opposé à une butée mécanique. Ainsi, il est possible d'avoir une butée théorique pour limiter le déplacement de la lame dans le sens inverse de la butée mécanique. Cela permet de borner le déplacement de la lame dans ses deux sens de déplacement.

Le moyen de détection peut comprendre une unique unité configurée pour détecter à la fois l'au moins une butée mécanique et l'au moins une butée théorique.

Alternativement, le moyen de détection de butée peut comprendre une première unité pour la détection d'au moins une butée mécanique et d'une deuxième unité, distincte de ladite première unité, pour la détection d'au moins une butée théorique.

Selon un mode de réalisation, la position d'une ou de chaque butée théorique peut être enregistrée dans le sécateur en usine.

Selon un mode de réalisation, le sécateur selon l'invention peut comprendre un moyen d'entrée pour définir la position d'au moins une butée théorique.

Ainsi, il est possible de définir et modifier la position d'une butée théorique et donc de personnaliser une ou chaque butée théorique. Par exemple il est possible d'augmenter la course possible de déplacement de la lame, en particulier pour compenser une usure de celle-ci. Il est aussi possible de réduire la course de déplacement de la lame, par exemple pour optimiser la consommation du sécateur lors de petites coupes.

Suivant un exemple de réalisation, le moyen d'entrée peut comprendre une interface de communication permettant de définir la position en nombre de tours moteurs, ou en une durée d'entrainement, d'au moins une butée théorique de manière numérique, par exemple sous la forme d'instructions numériques transmises par un appareil externe de type ordinateur, et mémorisé dans le sécateur.

Alternativement, ou en plus, le moyen d'entrée d'une butée théorique peut comprendre un moyen d'entrée manuel pour définir la position d'au moins une butée théorique.

Ce moyen d'entrée manuel peut par exemple comprendre une interface utilisateur ou un bouton, en particulier rotatif, permettant d'entrer la position d'une butée théorique.

Suivant un exemple de réalisation, ce moyen d'entrée manuel peut être prévu pour entrer un nombre de tours moteur, ou un durée d'entrainement, correspondant à la position d'une butée théorique à partir d'une butée mécanique, par exemple par l'intermédiaire d'une interface utilisateur comportant un pavé numérique, un bouton rotatif, etc.

Alternativement ou en plus, le moyen d'entrée manuel peut être prévu pour entrer la position actuelle de la lame mobile comme position de butée théorique. Dans ce cas, la lame est déplacée à la position souhaitée, une fois cette position atteinte, elle est entrée comme position de butée théorique, par exemple par appui sur un bouton de mémorisation.

Selon un mode de réalisation de l'invention, le sécateur peut être programmé pour mettre en oeuvre une séquence d'initialisation comprenant une mise en butée mécanique d'au moins une lame mobile.

Une mise en butée mécanique consiste à entrainer la lame dans un sens de déplacement jusqu'à ce qu'elle soit en position de butée mécanique.

Cela permet d'assurer un bon positionnement de la lame du sécateur selon l'invention et une bonne détection des positions de butée théoriques, le cas échéant.

Cette séquence d'initialisation peut par exemple être exécutée à chaque mise en tension du sécateur. Alternativement, cette initialisation peut être exécutée à intervalles réguliers, par exemple défini en nombre de coupes effectuées ou en temps passé depuis la dernière initialisation.

Selon un mode de réalisation, le sécateur selon l'invention peut comprendre plusieurs butées théoriques.

Ainsi, il est possible de détecter différentes fins de course théoriques de déplacement dans le sécateur selon l'invention, sans nécessiter de mise en butée mécanique.

Lorsque le sécateur comprend une lame mobile coopérant avec une contre-lame fixe, alors le sécateur selon l'invention peut comprendre plusieurs, en particulier deux, butées théoriques pour ladite lame mobile. Dans ce cas, chaque butée théorique peut constituer une limite de fin de course théorique dans un sens de déplacement de la lame mobile.

Lorsque le sécateur comprend deux lames mobiles coopérant entre-elles, alors le sécateur selon l'invention peut comprendre au moins une butée théorique, et en particulier deux butées théoriques, pour chaque lame mobile. Chaque butée théorique associée à chaque lame mobile peut constituer une limite de fin de course théorique dans un sens de déplacement de ladite lame mobile.

Suivant un mode de réalisation particulier, le sécateur selon l'invention peut comprendre une lame mobile associée à une contre-lame fixe.

Dans ce mode de réalisation, le sécateur selon l'invention peut comprendre deux butées mécaniques pour la lame mobile, chacune définissant une fin de course mécanique dans un sens de déplacement de ladite lame mobile.

Ainsi, il est possible de borner mécaniquement le déplacement de la lame mobile dans chacun de ses deux sens de déplacement, sans utilisation de capteurs additionnels. Cela permet ainsi d'éviter tout déraillement de la lame mobile lors de son déplacement.

Toujours dans ce mode de réalisation, le sécateur selon l'invention peut être programmé pour mettre en oeuvre une séquence d'initialisation comprenant :
- une première mise en butée mécanique de la lame mobile avec une première butée mécanique, dans un sens de déplacement,
- une deuxième mise en butée mécanique de la lame mobile avec une deuxième butée mécanique, dans le sens de déplacement opposé et
- une détermination d'un kit de lame équipé en fonction d'un nombre de tours moteur, ou d'une durée d'entrainement, entre lesdites butées mécaniques.

Ainsi, la lame mobile est d'abord entrainée dans un premier sens de déplacement, de préférence le sens d'ouverture de l'outil, jusqu'à ce qu'elle soit en position de butée mécanique avec une première butée mécanique. La lame mobile est ensuite entrainée dans en sens inverse, jusqu'à ce qu'elle soit en position de butée mécanique avec l'autre butée mécanique.

Connaissant le nombre de tours moteur requis, ou la durée d'entrainement requise, pour déplacer la lame mobile d'une position de butée mécanique à l'autre, il est possible de déterminer quel type de lame, ou kit de lame, est montée sur le sécateur. En effet, les différents kits de lame pouvant être monté sur le sécateur sont conçus pour effectuer des coupes de différentes tailles, et donc des ouvertures différentes. Ainsi, chaque kit de lame a des dimensions qui lui est propre permettant d'obtenir une ouverture différente entre les lames. Ainsi, le nombre de tours moteur requis, ou la durée d'entrainement requise, pour déplacer la lame mobile d'une butée mécanique à l'autre est propre à chaque kit de lame.

Par conséquent, il est possible pour le sécateur d'identifier chaque kit de lames en fonction du nombre de tours moteur requis, ou de la durée d'entrainement requise, pour déplacer la lame mobile équipée d'une butée mécanique à l'autre.

Les caractéristiques permettant de déterminer chacun des kits de lame, définies en tours moteur, ou en durée d'entrainement, sont de préférence enregistrés dans le sécateur en usine.

Encore dans ce mode de réalisation, le sécateur peut comprendre deux butées théoriques pour la lame mobile, chacune définissant une fin de course théorique dans au moins un sens de déplacement de ladite lame mobile.

Ainsi, il est possible de borner le déplacement de la lame mobile unique entre deux butées théoriques. Par conséquent, il est possible de borner la course de la lame mobile dans les deux sens de déplacement de la lame mobile, et ce sans nécessiter de mise en butée mécanique.

Selon une variante de ce mode réalisation, la position d'une ou de chacune des deux butées théoriques peut varier en fonction du kit de lame équipé sur le sécateur. Les positions de ces butées théorique, propre à chacun de kits de lame peuvent de préférence être enregistrées dans le sécateur, par exemple en usine.

### Description des figures et modes de réalisation

D'autres avantages et caractéristiques apparaîtront à l'examen de la description détaillée d'un mode de réalisation nullement limitatif, et des dessins annexés sur lesquels
- les FIGURES 1a et 1b sont des représentations schématiques partielles d'un exemple de réalisation non limitatif d'un sécateur selon l'invention ;
- les FIGURES 2a et 2b sont des représentations schématiques partielles d'un autre exemple de réalisation non limitatif d'un sécateur selon l'invention ;
- les FIGURES 3a et 3b sont des représentations schématiques partielles d'encore un autre exemple de réalisation non limitatif d'un sécateur selon l'invention ;
- la FIGURE 4 est une représentation schématique partielle d'un autre exemple de réalisation non limitatif d'un sécateur selon l'invention ; et
- la FIGURE 5 est une représentation schématique partielle d'un autre exemple de réalisation non limitatif d'un sécateur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

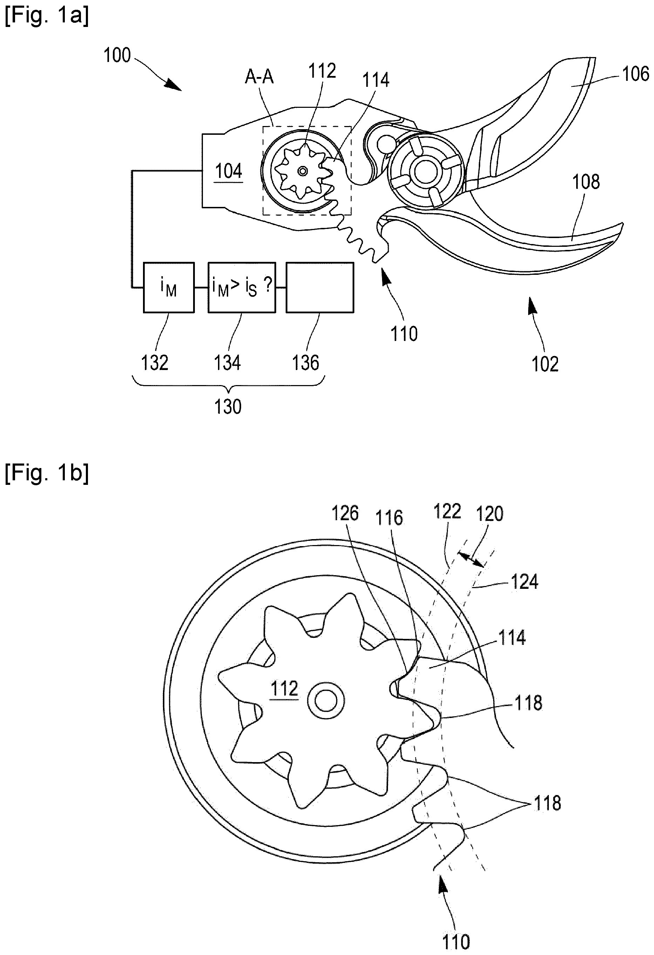

Les FIGURES 1a et 1b sont des représentations schématiques partielles d'un exemple de réalisation non limitatif d'un sécateur selon l'invention.

En particulier, la FIGURE 1a illustre une partie distale d'un sécateur motorisé électroportatif 100. La FIGURE 1b illustre, par une vue agrandie, des éléments compris dans le cadre A-A de la FIGURE 1a.

Le sécateur motorisé électroportatif 100 est équipé d'un outil de coupe 102 monté sur une extrémité distale du corps 104 de sécateur. L'outil de coupe 102 comprend une lame mobile 106 associée à une contre lame fixe 108.

La lame mobile 106 comprend, au niveau de son extrémité se trouvant du côté du corps 104 de sécateur, une section dentée 110 en prise avec une roue dentée 112 disposée sur le corps 104 du sécateur. Un moteur électrique (non illustré) est prévu pour entrainer la roue dentée 112 dans les deux sens de rotation de sorte à entrainer la lame mobile 106, en rotation, dans les deux sens d'entrainement, à savoir dans le sens de l'ouverture ou dans le sens de la fermeture de la lame mobile.

Le sécateur 100 comprend une butée mécanique 114, prévue sur la lame mobile 106. Cette butée mécanique 114 est prévue au niveau d'une extrémité de la section dentée 110 de la lame mobile 106.

La lame mobile 106 telle qu'illustrée au FIGURES 1a et 1b est en position de butée mécanique, la butée mécanique 114 étant au contact de la roue dentée 112. La position de butée mécanique de la lame mobile 106 illustrée correspond à la position de fin de course mécanique de ladite lame mobile 106 dans le sens d'ouverture de l'outil de coupe. Ainsi, lorsque la lame mobile 106 se trouve en butée mécanique, elle ne peut plus continuer à s'ouvrir, car la butée mécanique 114 s'oppose physiquement à sa rotation dans le sens de l'ouverture et donc à son ouverture au-delà de ladite butée mécanique 114.

Comme représentée plus en détail sur la FIGURE 1b, dans le sécateur 100, la butée mécanique 114 est formée par une modification du profil de denture de la section dentée 110. En particulier, la butée mécanique 114 est formée par un creux de dent 116 dont la profondeur est réduite par rapport à la profondeur des autres creux de dent 118 de la section dentée 110. Autrement dit, le creux de dent 116 est plus haut que les autres creux de dent de la section dentée. La différence de hauteur 120 entre le creux de dent 116 formant la butée mécanique 114 et les autres creux de dents 118 est mise en avant par leurs cercles de pied respectifs 122 et 124. Le profil de dent modifié formant la butée mécanique 114 comprend un flanc 126 dont la forme est prévue pour recevoir, au moins en partie, le flanc de dent de la roue dentée 112.

Dans l'exemple représenté, c'est le dernier creux de dent de la section dentée 110 qui forme la butée mécanique 114. Alternativement, un autre creux de dent de la section dentée 110 peut être utilisé comme butée mécanique, tel que par exemple l'avant dernier creux de dent de la section dentée dans le sens d'ouverture.

Le sécateur 100 comprend en outre un moyen de détection de butée mécanique 130. Ce moyen de détection de butée mécanique 130 a pour rôle de surveiller le courant consommé i_{M} par le moteur électrique pour actionner la lame mobile 106, pour détecter le moment où le courant consommé par le moteur devient supérieur à un seuil prédéterminé is. En effet, lorsque la lame mobile 106 est en butée mécanique, celle-ci s'oppose à ce que la lame s'ouvre d'avantage de sorte que le moteur consomme plus de courant pour tenter de continuer à la déplacer dans le sens d'ouverture. Cette augmentation du courant consommé par le moteur renseigne donc directement sur le fait que la lame mobile 106 est mis en butée mécanique, dans le sens d'ouverture.

Dans l'exemple illustré, le moyen de détection de butée mécanique 130 comprend :
- un premier module 132 mesurant le courant consommé par le moteur électrique i_{M}, en temps réel, ou du moins à une fréquence suffisamment élevée par rapport à la vitesse de déplacement de la lame mobile 106 ;
- un deuxième module 134 pour comparer la valeur du courant mesurée i_{M} par le premier module 132 au seuil is ; et
- un troisième module 136, optionnel, permettant de déclencher l'arrêt de l'entrainement de lame mobile 106 par le moteur, suivi ou non par un entrainement de la lame mobile 106 en sens inverse.

Chacun des modules 132, 134 et 136 peut être réalisé par au moins un composant numérique ou au moins un composant analogique, ou par une combinaison quelconque de composant(s) numérique(s) et de composant(s) analogique(s).

Chacun des modules 132-136 peut être indépendant. Alternativement au moins deux des modules 132-136 peuvent être combinés. Par exemple, les modules 132-136 peuvent être intégrés dans un unique composant électronique, tel qu'une puce électronique par exemple.

Chacun des modules 132-136 peut être disposé sur une carte existante dans le sécateur servant à d'autre fonction ou sur une carte dédiée.

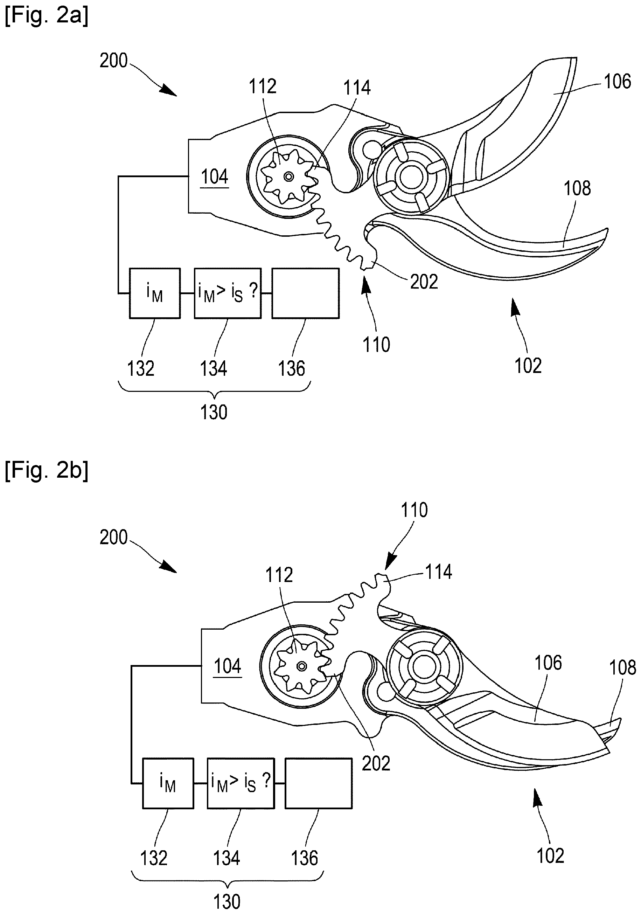

Les FIGURES 2a et 2b sont des représentations schématiques partielles d'un autre exemple de réalisation non limitatif d'un sécateur selon l'invention.

Le sécateur 200 des FIGURES 2a et 2b, illustré aux FIGURES 2a et 2b, comprend tous les éléments du sécateur 100 des FIGURES 1a et 1b.

De plus, le sécateur motorisé électroportatif 200 comporte une deuxième butée mécanique 202 prévue sur la lame mobile 106, et servant de butée mécanique pour la lame mobile 106 dans le sens de fermeture de la lame mobile 106.

Chaque butée mécanique 114 et 202 est disposée au niveau d'une extrémité de la section dentée 110 de la lame mobile 106. Chaque butée mécanique 114 et 202 constitue ainsi une limite de fin de course mécanique dans un sens de déplacement de la lame mobile.

En Figure 2a, la lame mobile 106 est en fin de course mécanique dans le sens d'ouverture de l'outil de coupe 102. Dans cette première position de butée mécanique, la butée mécanique 114 est au contact de la roue dentée 112.

En Figure 2b, la lame mobile 106 est en fin de course mécanique dans le sens de fermeture de l'outil de coupe 102. Dans cette deuxième position de butée mécanique, la butée mécanique 202 est au contact de la roue dentée 112.

La deuxième butée mécanique 202 présente une architecture similaire à celle de la butée 114. En particulier, comme pour la butée 114, la butée mécanique 202 est formée par une modification du profil de denture de la section dentée 110. Plus particulièrement, la butée mécanique 202 est formée par un creux de dent dont la profondeur est réduite par rapport à la profondeur des autres creux de dent 118 de la section dentée 110.

Dans l'exemple représenté, c'est chaque butée mécanique 114 et 202 est formée par le dernier creux de dent de la section dentée 110 à chacune des extrémités de la section dentée 110. Alternativement, au moins une des butées mécaniques 114 et 202 peut être formée par un autre creux de dent de la section dentée.

Dans le sécateur 200, le moyen de détection de butée mécanique 130 du sécateur 200 est configuré pour détecter la mise en butée mécanique dans les deux sens d'entrainement de la lame mobile 106. En effet, lors d'une mise en butée mécanique, quel que soit le sens de déplacement de la lame mobile 106, une butée mécanique 114, 202 s'oppose au déplacement de lame mobile 106 lorsque celle-ci vient en position de butée mécanique de sorte que le moteur consomme plus de courant pour tenter de continuer à la déplacer. Cette augmentation peut ainsi être détectée par le moyen de détection de butée mécanique 130.

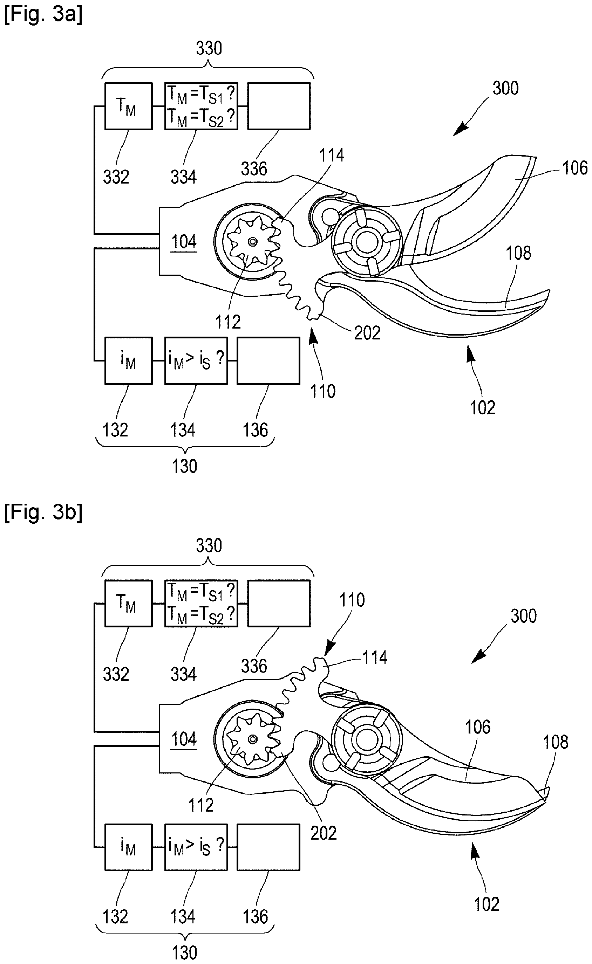

Les FIGURES 3a et 3b sont des représentations schématiques partielles d'encore un autre exemple de réalisation non limitatif d'un sécateur selon l'invention.

Le sécateur motorisé électroportatif 300 illustré aux FIGURES 3a et 3b comprend tous les éléments du sécateur 200 illustré aux FIGURES 2a et 2b.

Le sécateur 300 comprend en outre un moyen de détection de butées théoriques 330.

En effet, le sécateur 300 peut être munie d'une ou de deux butées théoriques. Dans l'exemple représenté, le sécateur 300 est munie de deux butées théoriques.

Chaque butée théorique a pour fonction de borner la course de la lame mobile 106, dans au moins un de ses sens de déplacement. Contrairement à une butée mécanique 114 ou 202, une butée théorique n'empêche pas physiquement la rotation de la lame 106. Toutefois, une butée théorique, et en particulier sa détection, permet d'arrêter l'entrainement de la lame mobile 106 par le moteur, sans que la lame mobile soit en position de butée mécanique.

Dans l'exemple représenté, la position de chaque butée théorique est définie en fonction d'une unique butée mécanique 114 ou 202 et d'un nombre de tours moteur T_{M} requis au moteur pour déplacer la lame mobile 106 depuis la position de ladite butée mécanique à la position de ladite butée théorique.

Dans cet exemple, les positions en tours moteur T_{S1} et T_{S2} des deux butées théoriques sont préenregistrées sécateur 300, par exemple par rapport à la position de la butée mécanique 114. En FIGURE 3a, la lame mobile 106 est en fin de course théorique, et donc en position de butée théorique, dans le sens d'ouverture de l'outil de coupe 102. Cette première position de butée théorique, se situe juste avant la position de butée mécanique 114 dans la course de déplacement de la lame mobile 106 de le sens de l'ouverture de l'outil de coupe 102. On notera qu'en position de fin de course théorique dans le sens de l'ouverture, telle qu'illustrée en FIGURE 3a, l'outil de coupe 102 est légèrement moins ouvert qu'en position de fin de course mécanique dans le sens de l'ouverture telle qu'illustrée en FIGURE 2a. En FIGURE 3b, la lame mobile 106 est en fin de course théorique, et donc en position de butée théorique, dans le sens de fermeture de l'outil de coupe 102. Cette deuxième position de butée théorique, se situe avant la position de butée mécanique 202 dans la course de déplacement de la lame mobile 106 de le sens de fermeture de l'outil de coupe 202. On notera qu'en position de fin de course théorique dans le sens de la fermeture, telle qu'illustrée en FIGURE 3b, l'outil de coupe 102 est légèrement moins fermé qu'en position de fin de course mécanique dans le sens de la fermeture telle qu'illustrée en FIGURE 2b.

Dans l'exemple illustré, le moyen de détection de butée théorique 330 comprend :
- un premier module 332 prévu pour tenir et mettre à jour un nombre de tour actuel du moteur T_{M}, également appelé registre de la position de la lame mobile, correspondant à la position actuelle de la lame mobile depuis une position de butée mécanique de la lame mobile, de préférence depuis la position de butée mécanique 114 dans le sens d'ouverture de l'outil de coupe 102. Afin de maintenir ce registre, un premier sens de rotation du moteur est assigné comme positif et le sens inverse de rotation comme négatif, et à la position de butée mécanique T_{M}=0. Par exemple le sens de rotation entrainant la lame dans le sens de la fermeture de l'outil de coupe est assigné comme positif de sorte que T_{M} augmente au fur et à mesure que la lame mobile 106 se ferme et le sens d'ouverture de l'outil de coupe est assigné comme négatif de sorte que T_{M} diminue au fur et à mesure que la lame mobile 106 se ferme. ;
- un deuxième module 334 pour comparer la valeur du nombre de tours moteur T_{M} du registre tenu par le premier module 332 aux positions T_{S1} et T_{S2} des butées théoriques exprimés en tours moteur ; et
- un troisième module 336, permettant de déclencher l'arrêt de l'entrainement de lame mobile 106 par le moteur, suivi ou non par un entrainement de la lame mobile 106 en sens inverse, lorsque le nombre de tours T_{M} est égal :
   - à T_{S1} : cela signifie que la lame mobile a atteint une butée théorique, par exemple une butée théorique dans le sens de l'ouverture ;
   - à T_{S2} : cela signifie que la lame mobile a atteint l'autre butée théorique, par exemple la butée théorique dans le sens de la fermeture de la lame.

Chacun des modules 332, 334 et 336 peut être réalisé par au moins un composant numérique ou au moins un composant analogique, ou par une combinaison quelconque de composant(s) numérique(s) et de composant(s) analogique(s).

Chacun des modules 332-336 peut être indépendant. Alternativement au moins deux des modules 332-336 peuvent être combinés. Par exemple, les modules 332-336 peuvent être intégrés dans un unique composant électronique, tel qu'une puce électronique.

Chacun des modules 332-336 peut être disposé sur une carte existante dans le sécateur servant à d'autres fonctions ou sur une carte dédiée.

Selon une variante non représentée, la position de chaque butée théorique est définie en fonction d'une unique butée mécanique et d'une durée d'entrainement requise au moteur pour déplacer la lame mobile à vitesse constante depuis la position de ladite butée mécanique à la position de ladite butée théorique. Le fonctionnement du moyen de détection de butée théorique de cette variante est analogue au fonctionnement du moyen de détection de butée théorique, décrit ci-dessus en relations avec les FIGURES 3a et 3b.

Selon une autre variante non représentée, les positions d'une première et d'une deuxième butée théorique sont définies en fonction d'une première et d'une seconde butée mécanique et d'un nombre de tours moteur, ou d'une durée d'entrainement. Le fonctionnement du moyen de détection de butée théorique de cette variante diffère du fonctionnement du moyen de détection de butée théorique décrit précédemment en relations avec les FIGURES 3a et 3b en ce que deux registres différent de position de lame sont tenu par le premier module, et en ce que le deuxième module compare les valeurs des positions de chaque butée théorique à la valeur actuel du registre correspondant.

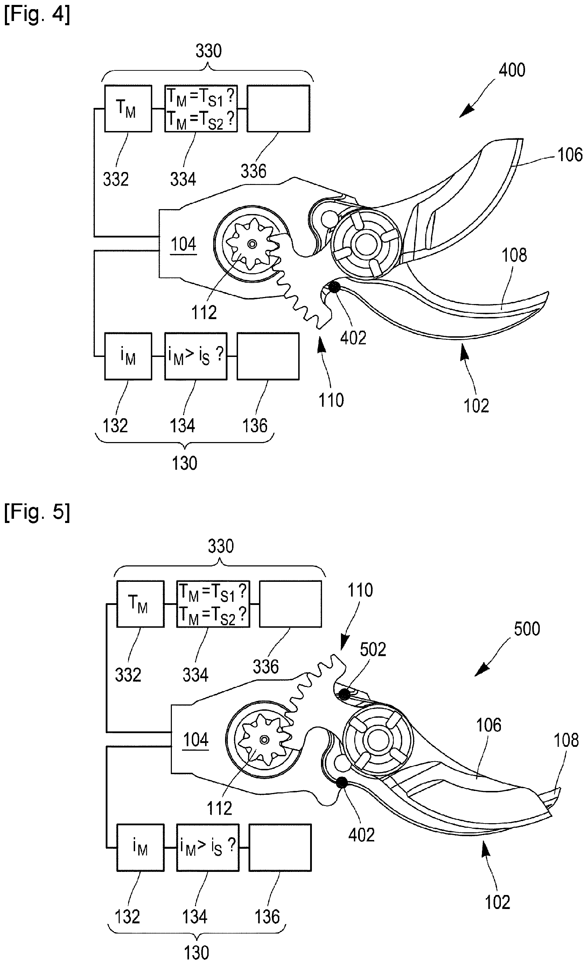

La FIGURE 4 est une représentation schématique partielle d'un autre exemple de réalisation non limitatif d'un sécateur selon l'invention.

Le sécateur motorisé électroportatif 400 de la FIGURE 4 diffère du sécateur 300 des FIGURES 3a et 3b, en ce qu'il comprend une unique butée mécanique 402.

De plus, à la différence du sécateur 300, la butée mécanique 402 du sécateur 400 n'est pas formée sur la lame mobile mais sur le corps du sécateur 400. En particulier, la butée mécanique 402 est formée par un picot, et de manière générale toute forme, faisant saillie du corps 104 du sécateur, fixe et solidaire dudit corps 104 du sécateur 400, et contre lequel la lame mobile 106 vient en butée lors de son ouverture.

La lame mobile 106 telle qu'illustré en FIGURE 4 est en position de butée mécanique. Dans cette position, la butée mécanique 402 est au contact d'une partie de la lame comprise entre l'axe de rotation de la lame est sa section dentée 110.

Outre la butée mécanique 402, le sécateur 400 comprend deux butées théoriques pouvant être détectés par le moyen de détection de butée théorique 330, à l'instar du sécateur 300. Ces butées théoriques sont définies en nombre de tours moteur, par rapport à la position de mise une butée mécanique de la lame 106 avec la butée mécanique 402. Ces deux butées théoriques permettent ainsi de borner la course de déplacement de la lame mobile 406 dans le sens d'ouverture et de fermeture de l'outils de coupe 102.

Selon une variante de réalisation non représentée, le sécateur 400 peut comprendre une butée théorique unique définie par rapport à la butée mécanique 402, de sorte à former une limite de déplacement théorique de la lame mobile 106 le sens de fermeture de l'outil de coupe 102.

Suivant une autre variante non représentée, la butée mécanique 402 peut être disposée de sorte à borner physiquement le déplacement de la lame mobile 106 dans le sens de fermeture de l'outil de coupe 102.

La FIGURE 5 est une représentation schématique partielle d'un autre exemple de réalisation non limitatif d'un sécateur selon l'invention.

Le sécateur motorisé électroportatif 500 de la FIGURE 5 comprend tous les éléments du sécateur 400 de la FIGURE 4.

Le sécateur 500 comprend en outre une deuxième butée mécanique 502.

Dans l'exemple représenté, et de manière non limitative, la deuxième butée mécanique 502 se présente sous la forme d'un picot faisant saillie du corps 104.

Cette butée mécanique 502 borne physiquement le déplacement de la lame mobile 106 dans le sens de fermeture de l'outil de coupe 102.

La lame mobile 106 telle qu'illustrée en FIGURE 5 est en position de butée mécanique avec la butée 502.

Le sécateur 500 tel que représenté à la FIGURE 5 comprend deux butées théoriques.

Suivant une alternative non représentée, le sécateur 500 peut comprendre une unique butée théorique.

Suivant d'autres autres variantes non représentées, les sécateurs 300, 400 et 500 des FIGURES 3a-3b, 4 et 5 peuvent être dépourvus de butée théorique.

Bien entendu, l'invention n'est pas limitée aux exemples détaillés ci-dessus.

## Revendications

1. Sécateur (100;200;300;400;500) motorisé électroportatif comprenant :
- au moins une lame mobile (106),
- un moteur électrique pour entrainer ladite au moins une lame mobile (106), et
- au moins une butée mécanique (114;202;402;502) de fin de course mécanique de ladite lame mobile (106) dans au moins un sens de déplacement ;
**caractérisé en ce qu'**il comprend en outre un moyen de détection de butée (130;330), dans ledit au moins un sens de déplacement, en fonction d'un courant consommé par ledit moteur électrique.

2. Sécateur (100;200;300) selon la revendication précédente, **caractérisé en ce que** au moins une butée mécanique (114;202) est prévue sur ladite au moins une lame mobile (106).

3. Sécateur (100;200;300) selon la revendication précédente, **caractérisé en ce que** ladite au moins une lame mobile (106) comprend une section dentée (110) en prise avec une roue dentée (112), au moins une butée mécanique (114;202) étant formée par une modification du profil de denture de ladite section dentée (112), à au moins une de ses extrémités.

4. Sécateur (200;300;500) selon l'une quelconque des revendications précédentes, **caractérisé en ce que** le sécateur comprend plusieurs butées mécaniques (114,202;402,502).

5. Sécateur (100;200;300;400;500) selon l'une quelconque des revendications précédentes, **caractérisé en ce que** le moyen de détection de butée (130) est configuré pour comparer le courant consommé par le moteur à un seuil prédéfini.

6. Sécateur (300;400;500) selon l'une quelconque des revendications précédentes, **caractérisé en ce qu'**il comprend au moins une butée théorique de fin de course d'au moins une lame mobile (106) dont la position est définie en fonction d'au moins une butée mécanique et :
- d'un nombre de tours moteur ou,
- d'une durée d'entrainement ;
le moyen de détection de butée (330) étant en outre configuré pour détecter au moins une butée théorique dans au moins un sens de déplacement d'au moins une lame mobile (106).

7. Sécateur (300;400;500) selon la revendication précédente, **caractérisé en ce qu'**il comprend un moyen d'entrée pour définir la position d'au moins une butée théorique.

8. Sécateur (300;400;500) selon la revendication 6 ou 7, **caractérisé en ce qu'**il comprend un moyen d'entrée manuel pour définir la position d'au moins une butée théorique.

9. Sécateur (300;400;500) selon l'une quelconque des revendications précédentes, **caractérisé en ce qu'**il est programmé pour mettre en oeuvre une séquence d'initialisation comprenant une mise en butée mécanique d'au moins une lame mobile (106).

10. Sécateur (300;400;500) selon la revendication 6 et l'une quelconque des revendications précédentes, **caractérisé en ce que** le sécateur comprend plusieurs butées théoriques.

11. Sécateur (100;200;300;400;500) selon l'une quelconque des revendications précédentes, **caractérisé en ce qu'**il comprend une lame mobile (106) associée à une contre-lame fixe (108).

12. Sécateur (200;300;500) selon la revendication précédente, **caractérisé en ce qu'**il comprend deux butées mécaniques (114,202;402,502) pour la lame mobile (106), chacune définissant une fin de course mécanique dans un sens de déplacement de ladite lame mobile (106).

13. Sécateur (200;300;500) selon les revendications 9 et 12, **caractérisé en ce que** la séquence d'initialisation comprend :
- une première mise en butée mécanique de la lame mobile (106) avec une première butée mécanique (114,202;402,502) , dans un sens de déplacement,
- une deuxième mise en butée mécanique de la lame mobile (106) avec une deuxième butée mécanique (114,202;402,502), dans le sens de déplacement opposé, et
- une détermination d'un kit de lame équipé en fonction d'un nombre de tours moteur, ou d'une durée d'entrainement, entre lesdites butées mécaniques.

14. Sécateur (200;300;500) selon la revendication 6 et l'une quelconque des revendications 11-13, **caractérisé en ce qu'**il comprend deux butées théoriques pour la lame mobile, chacune définissant une fin de course théorique dans au moins un sens de déplacement de ladite lame mobile (106).

## Patentansprüche

1. Motorisierte, tragbare elektrische Gartenschere (100; 200; 300; 400; 500), umfassend:
- mindestens eine bewegbare Klinge (106),
- einen Elektromotor zum Antreiben der mindestens einen bewegbaren Klinge (106) und
- mindestens einen mechanischen Anschlag (114; 202; 402; 502) für die mechanische Endbegrenzung der bewegbaren Klinge (106) in mindestens einer Verschiebungsrichtung;
**dadurch gekennzeichnet, dass** sie ferner ein Mittel zum Erfassen des Anschlags (130; 330) in der mindestens einen Verschiebungsrichtung in Abhängigkeit von einem durch den Elektromotor verbrauchten Strom umfasst.

2. Gartenschere (100; 200; 300) nach dem vorstehenden Anspruch, **dadurch gekennzeichnet, dass** mindestens ein mechanischer Anschlag (114; 202) an der mindestens einen bewegbaren Klinge (106) vorgesehen ist.

3. Gartenschere (100; 200; 300) nach dem vorstehenden Anspruch, **dadurch gekennzeichnet, dass** die mindestens eine bewegbare Klinge (106) einen gezahnten Abschnitt (110) umfasst, der mit einem Zahnrad (112) in Eingriff steht, wobei mindestens ein mechanischer Anschlag (114; 202) durch eine Änderung des Zahnungsprofils des gezahnten Abschnitts (112) an mindestens einem seiner Enden ausgebildet ist.

4. Gartenschere (200; 300; 500) nach einem der vorstehenden Ansprüche, **dadurch gekennzeichnet, dass** die Gartenschere mehrere mechanische Anschläge (114, 202; 402, 502) umfasst.

5. Gartenschere (100; 200; 300; 400; 500) nach einem der vorstehenden Ansprüche, **dadurch gekennzeichnet, dass** das Mittel (130) zum Erfassen des Anschlags zum Vergleichen des durch den Motor verbrauchten Stroms mit einem vordefinierten Schwellenwert konfiguriert ist.

6. Gartenschere (300; 400; 500) nach einem der vorstehenden Ansprüche, **dadurch gekennzeichnet, dass** sie mindestens einen theoretischen Anschlag für eine Endbegrenzung mindestens einer bewegbaren Klinge (106) umfasst, deren Position in Abhängigkeit definiert ist von: mindestens einem mechanischen Anschlag und:
- einer Anzahl von Motorumdrehungen oder
- einer Antriebsdauer;
wobei das Mittel (330) zum Erfassen des Anschlags ferner zum Erfassen mindestens eines theoretischen Anschlags in mindestens einer Verschiebungsrichtung mindestens einer bewegbaren Klinge (106) konfiguriert ist.

7. Gartenschere (300; 400; 500) nach dem vorstehenden Anspruch, **dadurch gekennzeichnet, dass** sie ein Eingabemittel zum Definieren der Position mindestens eines theoretischen Anschlags umfasst.

8. Gartenschere (300; 400; 500) nach Anspruch 6 oder 7,
**dadurch gekennzeichnet, dass** sie ein manuelles Eingabemittel zum Definieren der Position mindestens eines theoretischen Anschlags umfasst.

9. Gartenschere (300; 400; 500) nach einem der vorstehenden Ansprüche, **dadurch gekennzeichnet, dass** sie zum Implementieren einer Initialisierungssequenz, umfassend ein mechanisches zum Anschlag Bringen mindestens einer bewegbaren Klinge (106), programmiert ist.

10. Gartenschere (300; 400; 500) nach Anspruch 6 und einem der vorstehenden Ansprüche, **dadurch gekennzeichnet, dass** die Gartenschere mehrere theoretische Anschläge umfasst.

11. Gartenschere (100; 200; 300; 400; 500) nach einem der vorstehenden Ansprüche, **dadurch gekennzeichnet, dass** sie eine bewegbare Klinge (106), die mit einer feststehenden Gegenklinge (108) verbunden ist, umfasst.

12. Gartenschere (200; 300; 500) nach dem vorstehenden Anspruch, **dadurch gekennzeichnet, dass** sie zwei mechanische Anschläge (114, 202; 402, 502) für die bewegbare Klinge (106), die jeweils eine mechanische Endbegrenzung in einer Verschiebungsrichtung der bewegbaren Klinge (106) definieren, umfasst.

13. Gartenschere (200; 300; 500) nach den Ansprüchen 9 und 12,
**dadurch gekennzeichnet, dass** die Initialisierungssequenz umfasst:
- ein erstes mechanisches zum Anschlag Bringen der bewegbaren Klinge (106) mit einem ersten mechanischen Anschlag (114, 202; 402, 502) in einer Verschiebungsrichtung,
- ein zweites mechanisches zum Anschlag Bringen der bewegbaren Klinge (106) mit einem zweiten mechanischen Anschlag (114, 202; 402, 502) in der entgegengesetzten Verschiebungsrichtung und
- eine Bestimmung eines ausgerüsteten Klingensatzes in Abhängigkeit von einer Anzahl von Motorumdrehungen oder einer Antriebsdauer zwischen den mechanischen Anschlägen.

14. Gartenschere (200; 300; 500) nach Anspruch 6 und einem der Ansprüche 11 bis 13, **dadurch gekennzeichnet, dass** sie zwei theoretische Anschläge für die bewegbare Klinge, die jeweils eine theoretische Endbegrenzung in mindestens einer Verschiebungsrichtung der bewegbaren Klinge (106) definieren, umfasst.

## Claims

1. A portable electric motorized shears (100;200;300;400;500) comprising:
- at least one movable blade (106),
- an electric motor for driving said at least one movable blade (106), and
- at least one mechanical end-of-travel end stop (114;202;402;502) of said movable blade (106) in at least one direction of displacement;
**characterized in that** it also comprises an end stop detection means (130; 330) in said at least one direction of displacement, as a function of a current consumed by said electric motor.

2. The shears (100;200;300) according to the preceding claim, **characterized in that** at least one mechanical end stop (114;202) is provided on said at least one movable blade (106).

3. The shears (100;200;300) according to the preceding claim, **characterized in that** said at least one movable blade (106) comprises a toothed section (110) engaging with a toothed wheel (112), at least one mechanical end stop (114; 202) being formed by a modification of the toothing profile of said toothed section (112), at at least one of its ends.

4. The shears (200;300;500) according to any one of the preceding claims, **characterized in that** the shears comprise several mechanical end stops (114,202;402,502).

5. The shears (100;200;300;400;500) according to any one of the preceding claims, **characterized in that** the end stop detection means (130) is configured to compare the current consumed by the motor with a predefined threshold.

6. The shears (300;400;500) according to any one of the preceding claims, **characterized in that** they comprise at least one theoretical end-of-travel end stop of at least one movable blade (106), the position of which is defined as a function of at least one mechanical end stop and:
- of a number of motor revolutions, or
- of a duration of drive;
the end stop detection means (330) also being configured to detect at least one theoretical end stop in at least one direction of displacement of at least one movable blade (106).

7. The shears (300;400;500) according to the preceding claim, **characterized in that** they comprise an input means for defining the position of at least one theoretical end stop.

8. The shears (300;400;500) according to claim 6 or 7, **characterized in that** they comprise a manual input means for defining the position of at least one theoretical end stop.

9. The shears (300;400;500) according to any one of the preceding claims, **characterized in that** they are programmed to implement an initialization sequence comprising a mechanical abutment of at least one movable blade (106).

10. The shears (300;400;500) according to claim 6 and any one of the preceding claims, **characterized in that** the shears comprise several theoretical end stops.

11. The shears (100;200;300;400;500) according to any one of the preceding claims, **characterized in that** they comprise a movable blade (106) associated with a fixed counter-blade (108).

12. The shears (200;300;500) according to the preceding claim, **characterized in that** they comprise two mechanical end stops (114,202;402, 502) for the movable blade (106), each defining a mechanical end-of-travel in a direction of displacement of said movable blade (106).

13. The shears (200;300;500) according to claims 9 and 12, **characterized in that** the initialization sequence comprises:
- a first mechanical abutment of the movable blade (106) with a first mechanical end stop (114,202;402,502), in one direction of displacement,
- a second mechanical abutment of the movable blade (106) with a second mechanical end stop (114,202;402,502), in the opposite direction of displacement, and
- determining a fitted blade kit as a function of a number of motor revolutions, or of a duration of drive, between said mechanical end stops.

14. Shears (200; 300; 500) according to claim 6 and any one of claims 11-13, **characterized in that** they comprise two theoretical end stops for the movable blade, each defining a theoretical end-of-travel in at least one direction of displacement of said movable blade (106)
